# EUROPEAN PATENT APPLICATION

(11) **EP 2 851 853 A1**
(43) Date of publication of application: **25.03.2015**
(21) Application number: 14185820.9
(22) Date of filing: 22.09.2014
(51) Int. Cl.: G06Q 10/10

(54) **Project data management**

(30) Priority: 21.09.2013 US 201361880888 P
(71) Applicant: Services Petroliers Schlumberger, 75007 Paris (FR); Logined B.V., 2586 BJ S Gravenhage (NL)
(72) Inventor: Bergbauer, Vincent, Katy, TX Texas 77450 (US); Mukherjee, Ranadeep, Sugar Land, TX Texas 77479 (US)
(74) Representative: Li, Boxi

(57) **Abstract**

A system can include a processor; memory accessible by the processor; a network interface; one or more modules stored in the memory where the one or more modules include processor-executable instructions to instruct the system and where the instructions include instructions to receive packed information via the network interface; stage the packed information to a private storage area of a storage device; receive additional packed information via the network interface; stage the additional packed information to the private storage area of the storage device; receive a publication instruction via the network interface; and publish the information staged to the private storage area of the storage device.

## Description

### RELATED APPLICATIONS

This application claims priority to and the benefit of a U.S. Provisional Application having Serial No. 61/880,888, filed 21 September 2013, which is incorporated by reference herein.

### BACKGROUND

An application may provide for modeling a process, an environment, etc. Such an application may execute locally on a local computer. Where a user using the application constructs a project using the application, that user may desire making the project accessible to others, which may entail transfer of a substantial amount of information to a remote location. Various technologies, techniques, etc., described herein pertain to data management.

### SUMMARY

A system can include a processor, memory accessible by the processor, a network interface, and modules stored in the memory. The modules can include processor-executable instructions to instruct the system. These modules may include instructions to receive packed information via the network interface and to stage the packed information to a private storage area of a storage device. Further instructions may receive additional packed information via the network interface and stage the additional packed information to the private storage area of the storage device. The modules may also include instructions to receive a publication instruction via the network interface and to publish the information staged to the private storage area of the storage device.

A method can involve receiving packed information via a network interface, staging the packed information to a private storage area, receiving additional packed information via the network interface, staging the additional packed information to the private storage area, receiving a publication instruction via the network interface, and publishing the information staged to the private storage area.

A device can include a processor, memory accessible by the processor, and a network interface. Modules with processor-executable instructions may be stored in the memory. The modules may include instructions to execute a background process and to execute an application. The modules may also include instructions to instantiate an object using the application and associate a property with the object to establish a context using the application. Further instructions to pack information that represents the context into a packet using the background process and to transmit the packet via the network interface may also be included. Various other apparatuses, systems, methods, etc., are also disclosed.

This summary is provided to introduce a selection of concepts that are further described below in the detailed description. This summary is not intended to identify key or essential features of the claimed subject matter, nor is it intended to be used as an aid in limiting the scope of the claimed subject matter.

### BRIEF DESCRIPTION OF THE DRAWINGS

Features and advantages of the described implementations can be more readily understood by reference to the following description taken in conjunction with the accompanying drawings.
Fig. 1 illustrates an example system that includes various components for simulating a geological environment;
Fig. 2 illustrates an example of a system;
Fig. 3 illustrates an example of a system;
Fig. 4 illustrates an example of a system;
Fig. 5 illustrates an example of a method and an example of a system;
Fig. 6 illustrates examples of methods;
Fig. 7 illustrates an example of a method;
Fig. 8 illustrates examples of transfers;
Fig. 9 illustrates examples of data structures;
Fig. 10 illustrates an example of a table of examples of calls;
Fig. 11 illustrates an example of a system;
Fig. 12 illustrates an example of data structures and linkages;
Fig. 13 illustrates an example of a method that can include hashing;
Fig. 14 illustrates examples of methods and examples of systems; and
Fig. 15 illustrates example components of a system and a networked system.

### DETAILED DESCRIPTION

This description is not to be taken in a limiting sense, but rather is made merely for the purpose of describing the general principles of the implementations. The scope of the described implementations should be ascertained with reference to the issued claims.

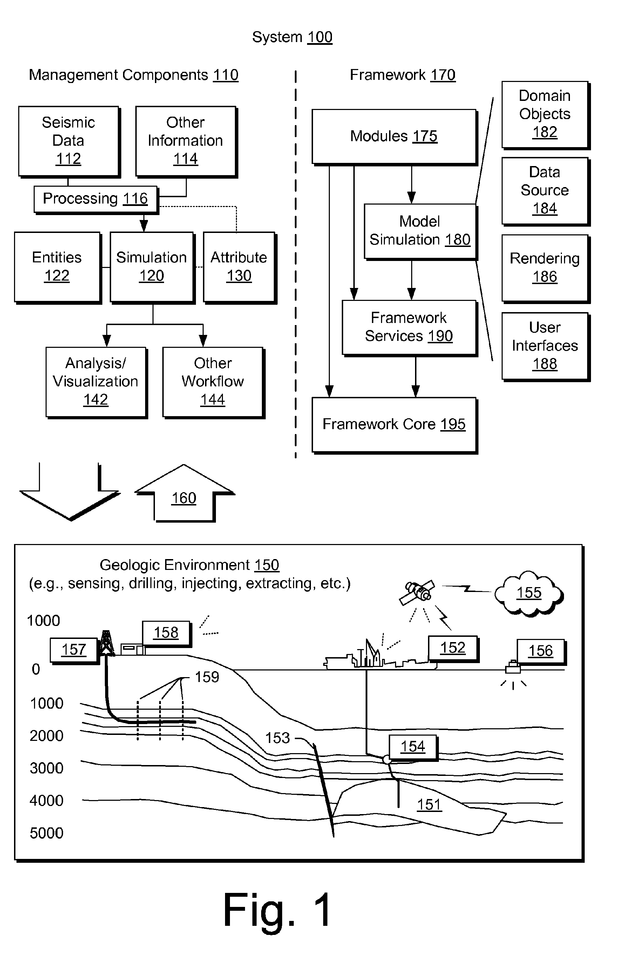

Fig. 1 shows an example of a system 100 that includes various management components 110 to manage various aspects of a geologic environment 150 (e.g., an environment that includes a sedimentary basin, a reservoir 151, one or more fractures 153, etc.). For example, the management components 110 may allow for direct or indirect management of sensing, drilling, injecting, extracting, etc., with respect to the geologic environment 150. In turn, further information about the geologic environment 150 may become available as feedback 160 (e.g., optionally as input to one or more of the management components 110).

In the example of Fig. 1, the management components 110 include a seismic data component 112, an additional information component 114 (e.g., well/logging data), a processing component 116, a simulation component 120, an attribute component 130, an analysis/visualization component 142 and a workflow component 144. In operation, seismic data and other information provided per the components 112 and 114 may be input to the simulation component 120.

In an example embodiment, the simulation component 120 may rely on entities 122. Entities 122 may include earth entities or geological objects such as wells, surfaces, reservoirs, etc. In the system 100, the entities 122 can include virtual representations of actual physical entities that are reconstructed for purposes of simulation. The entities 122 may include entities based on data acquired via sensing, observation, etc. (e.g., the seismic data 112 and other information 114). An entity may be characterized by one or more properties (e.g., a geometrical pillar grid entity of an earth model may be characterized by a porosity property). Such properties may represent one or more measurements (e.g., acquired data), calculations, etc.

In an example embodiment, the simulation component 120 may operate in conjunction with a software framework such as an object-based framework. In such a framework, entities may include entities based on pre-defined classes to facilitate modeling and simulation. A commercially available example of an object-based framework is the MICROSOFT™ .NET™ framework (Redmond, Washington), which provides a set of extensible object classes. In the .NET™ framework, an object class encapsulates a module of reusable code and associated data structures. Object classes can be used to instantiate object instances for use by a program, script, etc. For example, borehole classes may define objects for representing boreholes based on well data. A model of a basin, a reservoir, etc. may include one or more boreholes where a borehole may be, for example, for measurements, injection, production, etc. As an example, a borehole may be a wellbore of a well, which may be a completed well (e.g., for production of a resource from a reservoir, for injection of material, etc.).

In the example of Fig. 1, the simulation component 120 may process information to conform to one or more attributes specified by the attribute component 130, which may include a library of attributes. Such processing may occur prior to input to the simulation component 120 (e.g., consider the processing component 116). As an example, the simulation component 120 may perform operations on input information based on one or more attributes specified by the attribute component 130. In an example embodiment, the simulation component 120 may construct one or more models of the geologic environment 150, which may be relied on to simulate behavior of the geologic environment 150 (e.g., responsive to one or more acts, whether natural or artificial). In the example of Fig. 1, the analysis/visualization component 142 may allow for interaction with a model or model-based results (e.g., simulation results, etc.). As an example, output from the simulation component 120 may be input to one or more other workflows, as indicated by a workflow component 144.

As an example, the simulation component 120 may include one or more features of a simulator such as the ECLIPSE™ reservoir simulator (Schlumberger Limited, Houston Texas), the INTERSECT™ reservoir simulator (Schlumberger Limited, Houston Texas), the VISAGE™ geomechanics simulator (Schlumberger Limited, Houston Texas), the PETROMOD™ petroleum systems simulator (Schlumberger Limited, Houston Texas), the PIPESIM™ network simulator (Schlumberger Limited, Houston Texas), etc. The ECLlPSE™ simulator includes numerical solvers that may provide simulation results such as, for example, results that may predict dynamic behavior for one or more types of reservoirs, that may assist with one or more development schemes, which may assist with one or more production schemes, etc. The VISAGE™ simulator includes finite element numerical solvers that may provide simulation results such as, for example, results as to compaction and subsidence of a geologic environment, well and completion integrity in a geologic environment, cap-rock and fault-seal integrity in a geologic environment, fracture behavior in a geologic environment, thermal recovery in a geologic environment, CO₂ disposal, etc. The PETROMOD™ simulator includes finite element numerical solvers that may provide simulations results such as, for example, results as to structural evolution, temperature, and pressure history and as to effects of such factors on generation, migration, accumulation, and loss of oil and gas in a petroleum system through geologic time. Such a simulator can provide properties such as, for example, gas/oil ratios (GOR) and API gravities, which may be analyzed, understood, and predicted as to a geologic environment. The PIPESIM™ simulator includes solvers that may provide simulation results such as, for example, multiphase flow results (e.g., from a reservoir to a wellhead and beyond, etc.), flowline and surface facility performance, etc. The PIPESIM™ simulator may be integrated, for example, with the AVOCET™ production operations framework (Schlumberger Limited, Houston Texas). As an example, a reservoir or reservoirs may be simulated with respect to one or more enhanced recovery techniques (e.g., consider a thermal process such as SAGD, etc.).

In an example embodiment, the management components 110 may include features of a commercially available framework such as the PETREL™ seismic to simulation software framework (Schlumberger Limited, Houston, Texas). The PETREL™ framework provides components that allow for optimization of exploration and development operations. The PETREL™ framework includes seismic to simulation software components that can output information for use in increasing reservoir performance, for example, by improving asset team productivity. Through use of such a framework, various professionals (e.g., geophysicists, geologists, and reservoir engineers) can develop collaborative workflows and integrate operations to streamline processes (e.g., with respect to one or more geologic environments, etc.). Such a framework may be considered an application (e.g., executable using one or more devices) and may be considered a data-driven application (e.g., where data is input for purposes of modeling, simulating, etc.).

In an example embodiment, various aspects of the management components 110 may include add-ons or plug-ins that operate according to specifications of a framework environment. For example, a commercially available framework environment marketed as the OCEAN™ framework environment (Schlumberger Limited, Houston, Texas) allows for integration of add-ons (or plug-ins) into a PETREL™ framework workflow. The OCEAN™ framework environment leverages .NET™ tools (Microsoft Corporation, Redmond, Washington) and offers stable, user-friendly interfaces for efficient development. In an example embodiment, various components may be implemented as add-ons (or plug-ins) that conform to and operate according to specifications of a framework environment (e.g., according to application programming interface (API) specifications, etc.).

Fig. 1 also shows an example of a framework 170 that includes a model simulation layer 180 along with a framework services layer 190, a framework core layer 195 and a modules layer 175. The framework 170 may include the commercially available OCEAN™ framework where the model simulation layer 180 is the commercially available PETREL™ model-centric software package that hosts OCEAN™ framework applications. In an example embodiment, the PETREL™ software may be considered a data-driven application. The PETREL™ software can include a framework for model building and visualization. Such a model may include one or more grids.

The model simulation layer 180 may provide domain objects 182, act as a data source 184, provide for rendering 186 and provide for various user interfaces 188. Rendering 186 may provide a graphical environment in which applications can display their data while the user interfaces 188 may provide a common look and feel for application user interface components.

In the example of Fig. 1, the domain objects 182 can include entity objects, property objects and optionally other objects. Entity objects may be used to geometrically represent wells, surfaces, reservoirs, etc., while property objects may be used to provide property values as well as data versions and display parameters. For example, an entity object may represent a well where a property object provides log information as well as version information and display information (e.g., to display the well as part of a model).

In the example of Fig. 1, data may be stored in one or more data sources (or data stores, generally physical data storage devices), which may be at the same or different physical sites and accessible via one or more networks. The model simulation layer 180 may be configured to model projects. As such, a particular project may be stored where stored project information may include inputs, models, results and cases. Thus, upon completion of a modeling session, a user may store a project. At a later time, the project can be accessed and restored using the model simulation layer 180, which can recreate instances of the relevant domain objects.

In the example of Fig. 1, the geologic environment 150 may include layers (e.g., stratification) that include a reservoir 151 and that may be intersected by a fault 153. As an example, the geologic environment 150 may be outfitted with any of a variety of sensors, detectors, actuators, etc. For example, equipment 152 may include communication circuitry to receive and to transmit information with respect to one or more networks 155. Such information may include information associated with downhole equipment 154, which may be equipment to acquire information, to assist with resource recovery, etc. Other equipment 156 may be located remote from a well site and include sensing, detecting, emitting or other circuitry. Such equipment may include storage and communication circuitry to store and to communicate data, instructions, etc. As an example, one or more satellites may be provided for purposes of communications, data acquisition, etc. For example, Fig. 1 shows a satellite in communication with the network 155 that may be configured for communications, noting that the satellite may additionally or alternatively include circuitry for imagery (e.g., spatial, spectral, temporal, radiometric, etc.).

Fig. 1 also shows the geologic environment 150 as optionally including equipment 157 and 158 associated with a well that includes a substantially horizontal portion that may intersect with one or more fractures 159. For example, consider a well in a shale formation that may include natural fractures, artificial fractures (e.g., hydraulic fractures) or a combination of natural and artificial fractures. As an example, a well may be drilled for a reservoir that is laterally extensive. In such an example, lateral variations in properties, stresses, etc. may exist where an assessment of such variations may assist with planning, operations, etc. to develop a laterally extensive reservoir (e.g., via fracturing, injecting, extracting, etc.). As an example, the equipment 157 and/or 158 may include components, a system, systems, etc. for fracturing, seismic sensing, analysis of seismic data, assessment of one or more fractures, etc.

As mentioned, the system 100 may be used to perform one or more workflows. A workflow may be a process that includes a number of worksteps. A workstep may operate on data, for example, to create new data, to update existing data, etc. As an example, a workflow may operate on one or more inputs and create one or more results, for example, based on one or more algorithms. As an example, a system may include a workflow editor for creation, editing, executing, etc. of a workflow. In such an example, the workflow editor may provide for selection of one or more pre-defined worksteps, one or more customized worksteps, etc. As an example, a workflow may be a workflow implementable in the PETREL™ software, for example, that operates on seismic data, seismic attribute(s), etc. As an example, a workflow may be a process implementable in the OCEAN™ framework. As an example, a workflow may include one or more worksteps that access a module such as a plug-in (e.g., external executable code, etc.).

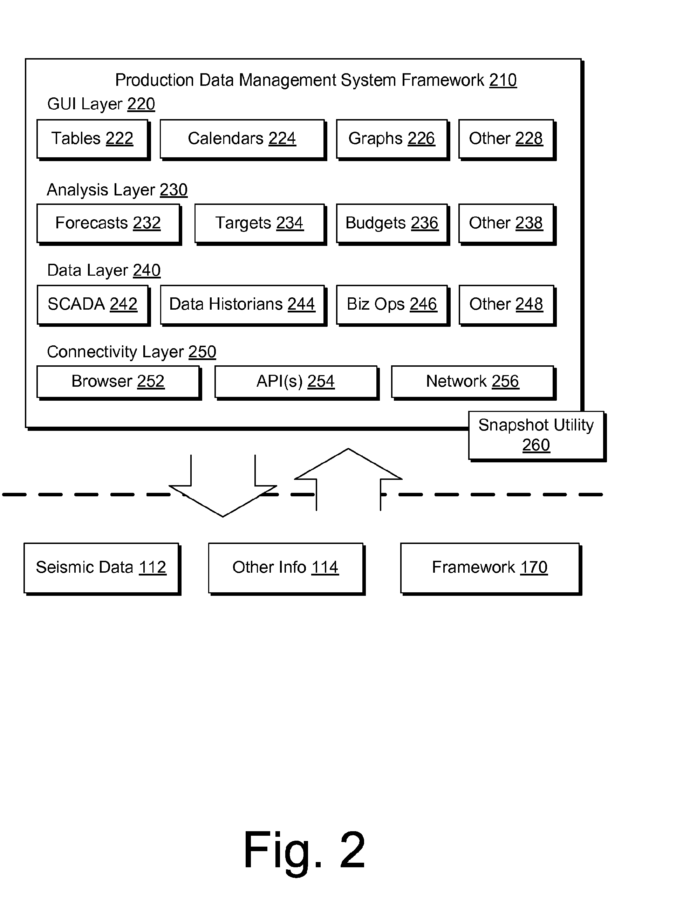

Fig. 2 shows an example of a production data management system framework 210, which includes a graphical user interface (GUI) layer 220, an analysis layer 230, a data layer 240 and a connectivity layer 250 as well as a snapshot utility 260 (e.g., or bookmark utility). As an example, the production data management system framework 210 may receive information such as information associated with one or more components of the example of Fig. 1. For example, Fig. 2 shows the production data management system framework 210 as receiving the seismic data 112 and the other information 114 as well as being interoperable with the framework 170. As an example, such a framework may include features for interoperability with one or more items of the geologic environment 150.

In the example of Fig. 2, the GUI layer 220 includes a tables module 222, a calendars module 224, a graphs module 226 and one or more other modules 228; the analysis layer 230 includes a forecasts module 232, a targets module 234, a budgets module 236 and one or more other modules 238; the data layer 240 includes a SCADA module 240, a data historians module 244, a business operations module 246 and one or more other modules 248; and the connectivity layer 250 includes a browser module 252, an application programming interface (API) module 254 and a network module 256. In the example of Fig. 2, the utility 260 may be part of the framework 210 or may be an add-in, a plug-in, etc.

As an example, a production data management systems framework may benefit field staff, production and reservoir engineers, production accountants, administrators, etc. One or more graphical user interfaces may be contextualized to view asset performance, monitor performance indicators, visualize relevant information that can affect production, impact performance, etc. As an example, performance metrics may be visualized, including allocated production against plan for a full portfolio of assets. As an example, a programming framework may support access to a production data management system framework, for example, via a network (e.g., the Internet) for data entry, validation, contextualization, viewing of information (e.g., in the field, office, mobile device, etc., where underlying platforms, operating systems, etc., may differ).

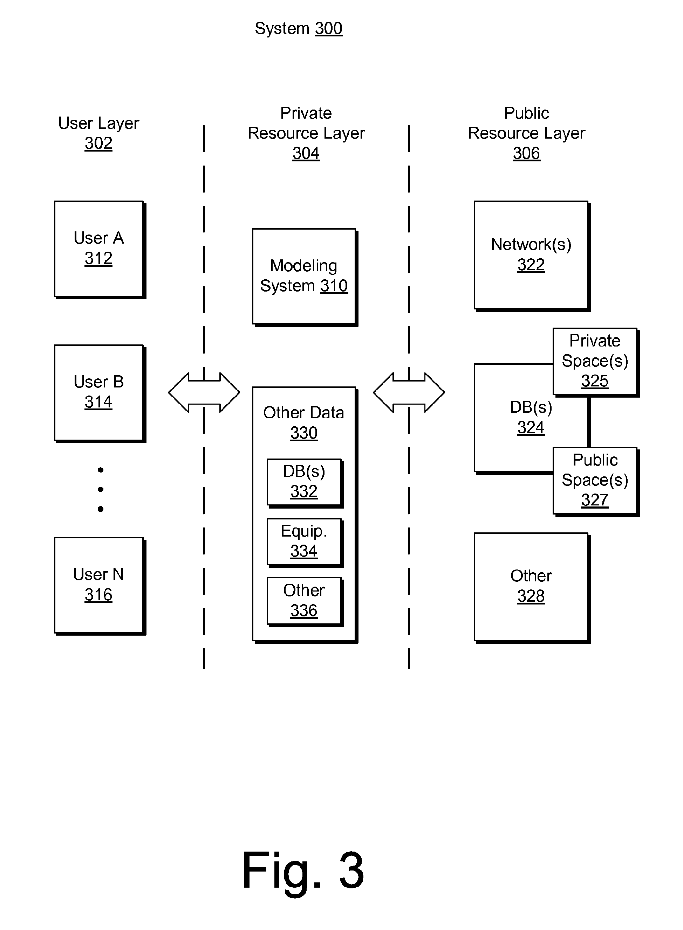

As an example, a system may include a framework configured with one or more modules (e.g., code, plug-ins, APIs, etc.) to leverage any of a variety of resources. Fig. 3 shows an example of a system that includes a user layer 302, a private resource layer 304 and a public resource layer 306. In the example of Fig. 3, the user layer 302 may include various users 312, 314 and 316 that have permissions or credentials for using the modeling system 310 of the private resource layer 304 (e.g., consider a system or systems that may include one or more frameworks, simulators, etc.), and optionally accessing other data 330, which may be considered private or proprietary. For example, the other data 330 may include data in one or more databases 332, equipment data 334, or other data 336. As to the modeling system 310, it may be a model simulation layer such as the layer 180 of the framework 170 and may include one or more of the management components 110 of Fig. 1. As an example, a framework such as the framework 170 may be part of the private resource layer 304 and include private, public or private and public modules configured to interact with the public resource layer 304 and optionally the other data 330 of the private resource layer 304. As to the public resource layer 306, in the example of Fig. 3, it includes one or more networks 322, one or more databases 324, and one or more other sources of information 328. As an example, the one or more databases 324 may include one or more private spaces 325 and one or more public spaces 327. As an example, a private space may be a space reserved for a user where such information is not accessible to another user. As an example, the user may optionally transform the private space or information therein into a public space, for example, such that it becomes accessible to other users (e.g., optionally within an organization, with particular credentials, etc.).

Users of a modeling system (e.g., a system for modeling, simulation, etc.) may benefit from resources that exist in a public resource layer. As an example, consider a user that spends considerable time sitting in front of a display and interacting with one or more applications for monitoring, modeling, simulating, controlling, etc. In such an example, an application may be knowledge and data driven and the user may experience productivity challenges when knowledge, data or both are not readily at accessible. To help overcome such challenges, one or more components may integrate public source data to assist a user or users. As an example, when a user desires knowledge or data, the user may invoke a component (e.g., during a monitoring session, a drilling session, a modeling session, etc.) where the component responds by rendering relevant public source data to the display.

As an example, the private resource layer 304 of the system 300 of Fig. 3 may include resources that are private as to individual users. For example, data in a private resource layer may be data resident on a particular computing machine being used by a user to perform one or more tasks that may be associated with a workflow, etc. As an example, the modeling system 310 of the private resource layer 304 of the system 300 of Fig. 3 may be a modeling system installed on a particular computing machine. For example, a user may use a computing machine that has modules stored to memory that may be executed within an operating system environment established by the computing machine (e.g., one or more processors operatively coupled to the memory). Such a computing machine may further include one or more network interfaces, for example, for accessing data, transmitting data, etc.

As an example, the private resource layer 304 of the system 300 of Fig. 3 may reside at least in part on a computing machine (e.g., a tablet computer, a notebook computer, a desktop computer, a workstation, etc.). As an example, such a computing machine may include a network interface for accessing one or more resources in the public resource layer 306. As an example, the public resource layer 306 may include the one or more private spaces 325, for example, space reserved for users, user projects, etc. As an example, a user may have control over one or more settings that determine whether a private space or information therein is or can become public (e.g., accessible to multiple users), for example, to be in at least one of the one or more public spaces 327.

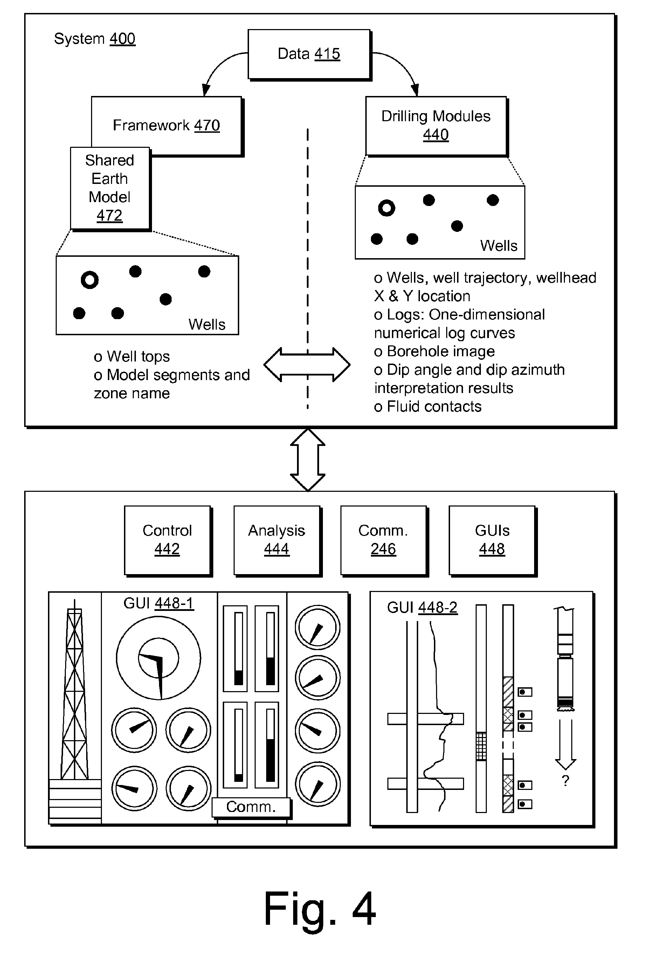

Fig. 4 shows an example of a system 400 that includes data 415, drilling modules 440 and a framework 470, which may be a framework such as the framework 170 of Fig. 1. As to the drilling modules 440, these may include a control module 442, an analysis module 444, a communication module 446 and one or more graphical user interface (GUI) modules 448, for example, to organize data and graphics commands for rendering of a GUI 448-1, a GUI 448-2, etc. In the example of Fig. 4, the GUIs 448-1 and 448-2 provide information relevant to a drilling process where such information may optionally include real time information.

As an example, the drilling modules 440 may include one or more modules of the commercially available TECHLOG™ wellbore framework (Schlumberger Limited, Houston, TX), which provides wellbore-centric, cross-domain workflows based on a data management layer. The TECHLOG™ wellbore framework includes features for petrophysics (core and log), geology, drilling, reservoir and production engineering, and geophysics.

As indicated in Fig. 4, information may be exchanged between the framework 470 and the drilling modules 440, optionally using plug-ins, APIs, etc. Such transfers may allow for spatial mapping, temporal mapping or spatial and temporal mapping of data between the framework 470 and the drilling modules 440. As an example, the framework 470 may access information associated with the drilling modules 440 pertaining to wells, well trajectory, wellhead location, logs, borehole images, dip angle and dip azimuth interpretation results, fluid contacts, etc. As an example, the drilling modules may access information associated with the framework 470 pertaining to well tops, model segments and zone name (e.g., for a model that includes one or more grids).

As to the data 415, it may be stored in one or more data storage devices locally, remotely, or locally and remotely. For example, consider data storage options that may exist in a private resource layer and/or a public resource layer (see, e.g., the layers 304 and 306 of Fig. 3). As an example, data may include seismic data, interpreted data, model data, measurement data, qualitative data, etc. Portions of such data may be relevant to the drilling modules 440 directly and/or the framework 470 directly. As shown in the example of Fig. 4, information transfers between the drilling modules 440 and the framework 470 may include other data, for example, acquired from one or more other sources and may include analyzed data (e.g., optionally with respect to a model, etc.).

As an example, the framework 470 and the drilling modules 440 may be stored in memory of computing machine that may be a local computing machine for a user that includes a network interface. In such an example, the network interface may provide for communication of information, for example, to a private space in a public resource. In such an example, the public resource may be accessible to users that possess certain credentials, for example, that, upon authentication, allow for access to public spaces of the public resources (e.g., shared spaces, sharable spaces, etc.). For example, a user at a local computing machine may perform various tasks where a background process executes that transfers information (e.g., deltas, etc.) to a private space in a public resource. In such an example, the user may enter a command, instruction, etc. that causes the information in the private space to become public (e.g., transferred to or changed to a public space of the public resource). In such an example, the background process may provide for serialization of constructs associated with a framework, modules, etc. As an example, the background process may trickle the information to the private space in the public resource. Such a process may operate with a relatively low overhead as to not diminish the user's experience (e.g., not detract noticeably from time of computing, memory fetches, etc. of the user using the framework, modules, etc. on the local computing machine).

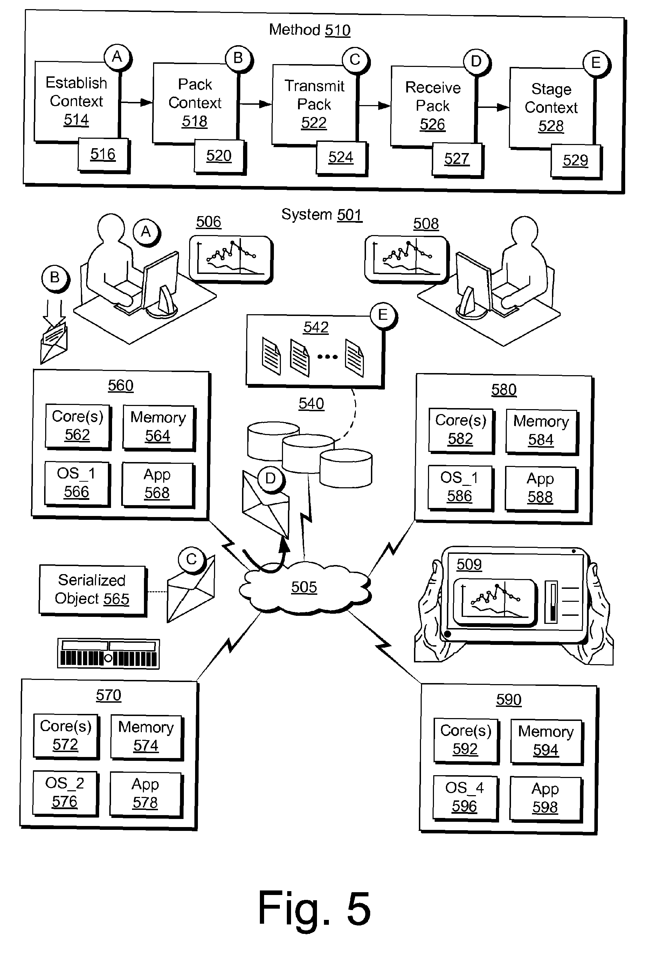

Fig. 5 shows an example of a system 501 and an example of a method 510, which may be performed using the system 501. The system 501 includes computing devices 560, 570, 580 and 590, each of which includes one or more cores 562, 572, 582, 592 and memory 564, 574, 584, 594. In the example of Fig. 5, the computing devices 560, 570, 580 and 590 may include the same or different operating systems 566, 576, 586 and 596, for example, depending on underlying hardware or one or more other factors. For example, the operating system 596 of the computing device 590 may be an operating system configured for mobile computing (e.g., the computing device 590 may be a mobile device, optionally include circuitry for cellular, satellite or other communication).

In the example of Fig. 5, each of the computing devices 560, 570, 580 and 590 includes one or more network interfaces that can connect to one or more networks 505, which may provide for access to one or more data storage devices 540 (e.g., databases). As to a client/server architecture, each of the computing devices 560, 570, 580 and 590 includes at least one application such as the respective applications 568, 578, 588 and 598. These applications may differ based on architecture, for example, where the computing device 570 is a server and the computing device 590 is a client device and the application 578 is a server-side application and the application 598 is a client-side application.

In the example of Fig. 5, the computing devices 560, 580 and 590 are shown as having associated graphical user interfaces 506, 508 and 509 where the graphical user interfaces 508 and 509 stem from a context of the graphical user interface 506 (e.g., a contextualized graphical user interface).

As to the method 510, it includes an establish block 514 for establishing a context (e.g., "A"), a pack block 518 for packing the context as a pack (e.g., "B"), a transmission block 522 for transmitting the pack (e.g., "C"), a reception block 526 for receiving the transmitted pack (e.g., "D"), and a stage block 528 for staging the context from the pack (e.g., "E"). For example, the context may be staged in a private space of a public resource (e.g., in a private workspace of a public resource). As an example, consider the one or more data storage devices 540 as including a private space 542 for staging contexts, which may, for example, later be made public (e.g., via transformation of the private space 542, transferring context to a public space, etc.).

The system 501 includes labels A, B, C, D and E, which correspond to various actions of the method 510. For example, a user at the computing device 560 may establish a context (A), a background process may pack the context as a pack (B), and initiate transmission of the pack (C). In such an example, the network 505 may direct the transmitted pack to the data storage 540 (D) where a server or other computing machine may store the pack with one or more other packs 542 (E) (e.g., stage the pack in a private space). As an example, where the user at the computing device 560 desires making transmitted packs (e.g., a context) public, an instruction may be transmitted such that the transmitted packs (e.g., context) become available to one or more of the computing devices 570, 580 and 590. For example, a user at the computing device 580 may access the context established by the user at the computing device 560 to recreate the context locally (see, e.g., the GUIs 506 and 508).

In the example of Fig. 5, the pack transmitted by the computing device 560 (C) is shown as optionally being serialized object 565. As an example, packing of a context may include serialization (e.g., mark-up language serialization, object serialization, binary serialization, etc.).

The method 510 is shown in Fig. 5 in association with various computer-readable media (CRM) blocks 516, 520, 524, 527 and 529 (e.g., non-transitory media that are not carrier waves). Such blocks generally include instructions suitable for execution by one or more processors (or cores) to instruct a computing device or system to perform one or more actions. While various blocks are shown, a single medium may be configured with instructions to allow for, at least in part, performance of various actions of the method 510. As an example, a computer-readable medium (CRM) may be a non-transitory computer-readable storage medium that is not a carrier wave. One or more CRM blocks may be provided for GUIs, etc. (see, e.g., GUIs 506, 508 and 509).

As an example, a user may execute one or more applications via a computing device, computing system, etc. as part of a workflow, for example, to develop one or more models of a geologic environment. Such users may desire to effectively share their data and collaborate with their colleagues, which may be located remotely and/or locally. Various applications may benefit from support of efficient data collaboration between multiple users, for example, even when they may not be connected through a network (e.g., for some period of time). For example, a user may have a computing device in the field at a location that may be remote from a network access point. As another example, a user may be in an environment that includes electromagnet noise, which may disrupt wired and/or wireless transmissions (e.g., as to a network or networks). As yet another example, a user may be in an environment where a supply of power may be unstable such that one or more pieces of network equipment (e.g., one or more links in a network) are unstable, which may periodically disrupt a network connection(s). As an example, a user may be operating a battery powered device, a generator powered device, etc. In such an example, the device may be stably operated via the supplied battery power, supplied generator power, etc. Where a network connection may not be available or may be unstable, such a user may operate the device in a mode where data are stored locally. As another example, a user may operate a device without a network connection where one or more perceived security and/or regulator issues may exist (e.g., consider data that may be sensitive, confidential, related to technology, etc.). In such an example, a secure network connection (e.g., satellite network, etc.) may be available, however, its use may be subject to one or more conditions (e.g., with respect to time, amount of information, format of information).

As an example, to allow users to collaborate in the face of an intermittently connected network (e.g., or other intermittent connection environment, scheme, etc.), a publish-subscribe technology may be implemented (e.g., consider STUDIO™ framework, Schlumberger Limited, Houston, Texas). As an example, a staging process such as the staging process of the method 510 of Fig. 5 may be implemented to enhance a publish-subscribe service (e.g., where transfer of the data may be transparent to a user). In such an example, publication may be relatively instantaneous, which may provide a mechanism that makes data collaboration integral to an application workflow, for example, with minimal impact to a user (e.g., performing her petro-technical work on a particular machine). Such a process may, as an example, allow for effective centralized data management of asset-wide petrotechnical data, optionally without impacting the end-user and while allowing disconnected operations.

As an example, a method may be referred to as a "Send-on-Save" method (e.g., a "SoS" method). As an example, such a method may optionally be implemented using a "standalone" software application that executes as a background process (e.g., silently) and that asynchronously sends incremental deltas of changed content to a data server responsive to a user saving some data to a project where the project is local to her computer. As an example, such data may remain segregated to a private sandbox that is invisible from other users (e.g., a private space, a private workspace or private staging area). In such an example, where the user decides to publish her data to share it with her asset team, further transfer on the network may be avoided because the data already resides in a remote location that can be made public (e.g., that includes or provides for public space). In such an example, publication may appear relatively instantaneous. In such an example, the local computer of the user that publishes may be free to perform one or more other tasks (e.g., the local computer is not burdened by a network data transfer, which may be of the order of tens of megabytes or more, etc.).

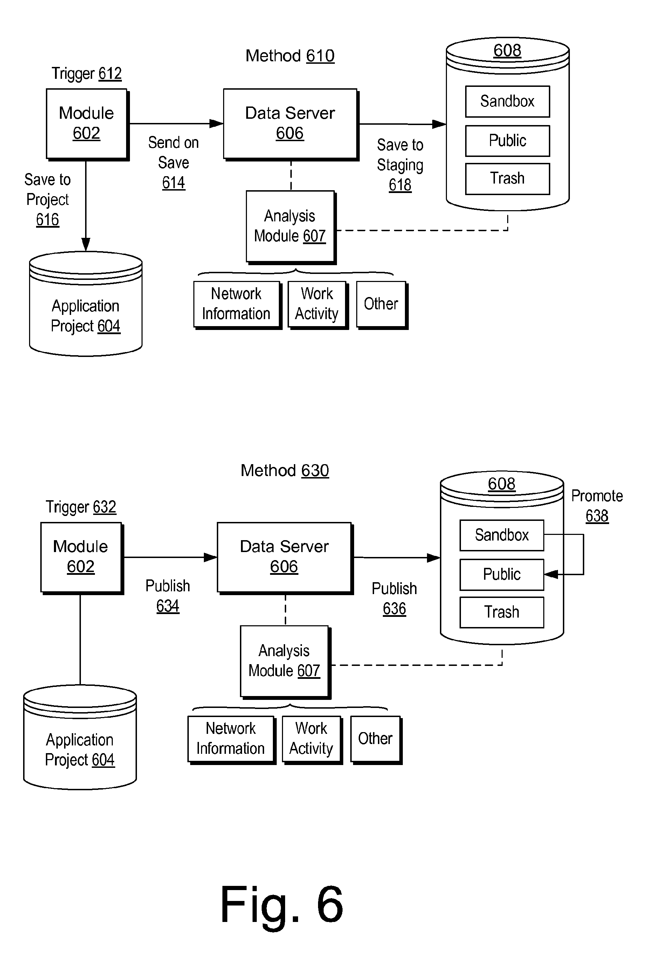

Fig. 6 shows an example of a method 610 and an example of a method 630. As shown, the method 610 pertains to staging information to a sandbox (e.g., reserved private data storage space). As shown, the method 630 pertains to publishing the staged information, for example, transitioning the sandboxed information (e.g., to a public data storage space).

In the example of Fig. 6, the method 610 is shown as being implemented via various components such as, for example, a module 602, a data storage that stores and application project 604, a data server 606, an analysis module 607 and a database 606 that includes the sandbox, the public space and a trash space. The method 610 can include a trigger 612 that initiates transmission of a send on save command 614 to the data server 606. As shown, the trigger 612 can also initiate transmission of a save to project command 616 for storing information to the data storage that stores the application project 604 (e.g., or an associated data storage). As shown, the data server 606 can transmit a save to staging command 618 for staging information in the database 606. For example, the information may be staged in the sandbox space of the database 606.

In the example of Fig. 6, the method 630 is shown as being implemented via components such as the module 602, the data server 606, the analysis module 607 and the database 608. As shown, a trigger 632 can initiate transmission of a publish command 634 to the data server 606 (e.g., or other data server), which, in response, can transmit a publish command 636 to the database 608. Once received by the database 608, the publish command 636 can issue a promote command 638 that acts to transfer (e.g., or tag, etc.) information in the sandbox to the public space of the database 608.

As an example, the analysis module 607 may include circuitry, instructions, etc. that can analyze information (e.g., via the data server 606, via the database 608, via one or more pieces of network equipment, etc.). For example, the analysis module 607 may analyze time information as to times of receipt of information by the data server 606 as sent by the module 602 (e.g., of a computing device). Such information may be germane to one or more networks (e.g., network conditions, etc.), work activity, etc. As an example, such a module may include features that can transmit one or more notifications based at least in part on an analysis. For example, a notification may be transmitted to a computing device that can call for tuning a process such as a send on save process. As an example, tuning may include adjusting one or more parameters. For example, consider a splitting parameter, a size parameter, a network transmission parameter, a network connection parameter, etc. As an example, an analysis module may analyze information associated with a plurality of computing devices, for example, consider a group where members of the group operate via individual computing devices. As an example, a group may be a group associated with a geologic environment (e.g., a project to develop resources of the geologic environment, etc.). As an example, the analysis module 607 may include features to analyze information that may be staged, published or staged and published. As an example, the analysis module 607 may include instructions executable to analyze timing information and information that is to be staged and/or that is staged. As an example, an analysis module may analyze one or more commands, timings of one or more commands, etc., optionally in conjunction with other information (e.g., timing information, staged information, published information, etc.).

As an example, an automatic background transmission of unpublished data to a server may allow for one or more types workflows. As an example, consider a workflow that includes re-creation of a local project from a private sandbox as a template project or as a local project recovery. As an example, consider a data management workflow such as a workflow that includes a backup and/or a recovery process, which may be a centralized process. As an example, a workflow may be a data management workflow that includes collecting data on sandbox data. In such an example, the data may be processed in a workflow or workflows, for example, to compute one or more performance indicators, one or more trends, etc. As an example, a method may include one or more proactive data management processes, optionally implemented via one or more data administrators (e.g., consider a breadcrumbs approach).

As an example, a system may include circuitry, modules, etc. for publishing and/or subscribing. For example, consider a publish-and-subscribe system that can add data collaboration to one or more individual user applications via a publish and subscribe mechanism.

As an example, a user may access a project (e.g., an application project) and when the user is ready to share data from that particular project, the user may initiate a process that can publish the data, for example, to a shared repository. For example, consider a user interacting with an application via a graphical user interface that includes a control graphic (e.g., a button, etc.) that can be actuated to initiate a publication process (e.g., via a trigger, etc.).

As an example, as to subscriptions to information, one or more users may register projects, users, types of information to which they may wish access upon publication. For example, a user may subscribe to change notifications in a repository, optionally restricting scope of one or more notifications (e.g., to show changed items that are present in an individual project, that belong to a specific folder, etc.). As an example, upon notification, a user may view proprieties of a particular data item (e.g., optionally represented as an object, etc.) and, for example, then decide to fetch it or not.

As an example, a system can include circuitry, modules, etc. that allow a user to continue working on a project, for example, from a remote location. In such an example, the user may be operating a computing device that may or may not be operatively coupled to a network (e.g., a corporate network, etc.). As an example, a remote location may be a rig location (e.g., on-shore, off-shore, etc.).

As an example, a system can include circuitry, modules, etc. that allows a user to maintain control of what data is publish, to be published and timings of publication. Such an approach to data management can reduces the amount of "noise" that be associated with sharing information that may be in rudimentary state, an uncertain state, etc. (e.g., consider information associated with unfinished work).

As an example, an individual user's local project may experience less latency, for example, as possible deadlock issues associated with a shared repository may be mitigated.

As an example, an application may be configured to support a publish/subscribe mode of operation, alternatively or additionally, to a live multi-user mode. For example, an application may include a module that can regulate operation mode. As an example, such a module may include a default state that a user can alter. As an example, a mode of operation may be set based on one or more factors such as type of information (e.g., client information, licensed information, etc.), location of user (e.g., as may be resolved via a cell phone, an IP address, etc.), etc.

As an example, a system may include circuitry, modules, etc. that can implement one or more process features. For example, consider a feature that can handle various scenarios, mitigate issues with one or more scenarios, etc. For example, consider a scenario where, until a data item is published, it may reside in a user's individual project. In such an example, if the project is stored on a local device (e.g., a local computing device such as a notebook, etc.), this data may be lost if the device is damaged, lost, etc. Where staging can be implemented for data, risk of loss may be mitigated. As another scenario, consider a data manager that lacks visibility as to on-going project work by one or more users (e.g., geo-scientists, etc.) and therefore lacks information that may allow for anticipation of an issue that might arise from data conflicts or usage of obsolete input data. Where staging can be implemented for data, a data manager may have access to staged information and/or information as to amount of information staged, user requesting staging, etc. Yet another scenario may occur while access to an individual project is fast where publishing and fetching data can create delay, for example, proportional to the amount of data to transfer. In such a scenario, a user may be dissuaded from publishing data to a shared repository. Where staging can be implemented, such delays may be mitigated.

As an example, a send on save method (e.g., a SoS method) may include transmitting one or more commands to a server or to servers that can access a server-side interim data storage space for storage of particular data that may be associated with an application project (e.g., a "project" in an application context, etc.).

As an example, SoS method may implement a server-side interim storage, for example, via a process such as: A user works on an individual project. As part of a workflow, the user saves work to the individual project (e.g., either explicitly via a save command, or implicitly, if the application supports an auto-save feature). In such an example, without particular user interaction, the application (e.g., a module of the application or associated with the application) may perform the following, for example, asynchronously (e.g., to avoid impacting the user): (a) connect to a remote repository's staging area for this individual project; (b) determine the difference between last data send to the staging area and data saved in the local project (e.g., local data storage, etc.); (c) create one or more batches of data to send to the staging area; (d) save the one or more batches until complete or until interrupted (e.g., if a user device disconnects from a network); (e) track last batch successfully saved to staging area; and (f) where a network interruption has occurred and where re-established (e.g., restored, etc.), one or more batch transfers may be resumed. In such an example, a data validation option may exist, however, an option may exist (e.g., as a default) for no data validation during a transfer, for example, such that project data are saved in a staging area "as-is".

As an example, where a user decides to publish at least a portion of data, a system can commence a workflow, for example, optionally asynchronously (e.g., as to not impact a user device). As an example, consider a method that includes determining whether data selected for transfer is in a staging area and, for example, transferring missing data from an individual project to the staging area (e.g., if desired).

As an example, in a remote repository, a method may include transferring data from a staging area that may be validated against a public repository. In such an example, in case of a validation error, a user may be notified of the validation and, for example, a transfer may be terminated. As an example, data may be promoted from the staging area to the public repository and, for example, one or more change notifications may be sent to one or more notification subscribers.

As an example, a system may perform one or more actions that may be independent of one or more user activities (e.g., activities of a user device). As an example, a system may perform an automatic backup of a repository, including one or more staging areas (e.g., per a schedule or schedules).

As an example, a data administrator (e.g., with an elevated privilege, etc.) may monitor one or more staging areas (e.g., optionally individual staging areas), for example to note that particular data has not been published for a long time (e.g., consider a breadcrumb scenario, etc.).

As an example, a user may browse the list of existing local projects that may, for example, be tracked by one or more servers (e.g., optionally with condition(s) of access rights) and, for example, request to get a clone of one or more project (e.g., to be created locally as a template project, etc.). For example, consider a scenario where a user "owns" a tracked project (e.g., or has administrative privileges) and where the user desires to cloned one or more items, which may include one or more items as content in an interim staging area. As an example, published data may be cloned, staged data may be cloned or published data and staged data may be cloned.

As an example, a system configured to implement a send on save process may include terminating one or more processes, disconnecting one or more connections, etc. As an example, a send on save process may control one or more times of publication of data, scope of a publication, time and scope of a publication, etc. As an example, a send on save process may be implemented, for example, on an individual user project (e.g., where a particular individual creates, modifies, etc. the project). As an example, a send on save process may be implemented on one or more multi-user projects.

As an example, a send on save process may reduce performance impact of publication over a network, for example, with respect to an end user. In such an example, a send on save process may implement incremental asynchronous transfer to a staging area and, for example, a server-side validation process. As an example, a process may assess data integrity. As an example, a process may include accessing interim work in a breadcrumb approach where staging of information to a staging area or staging areas is a proxy of work activity by one or more users with respect to one or more projects. For example, a data administrator may have access to interim user work as soon as users are on a network, for example, via a data administrator module that can access one or more staging areas. As an example, a process may back up interim work as a user connects to a network (e.g., once a network connection to a network operatively coupled to a database has been established).

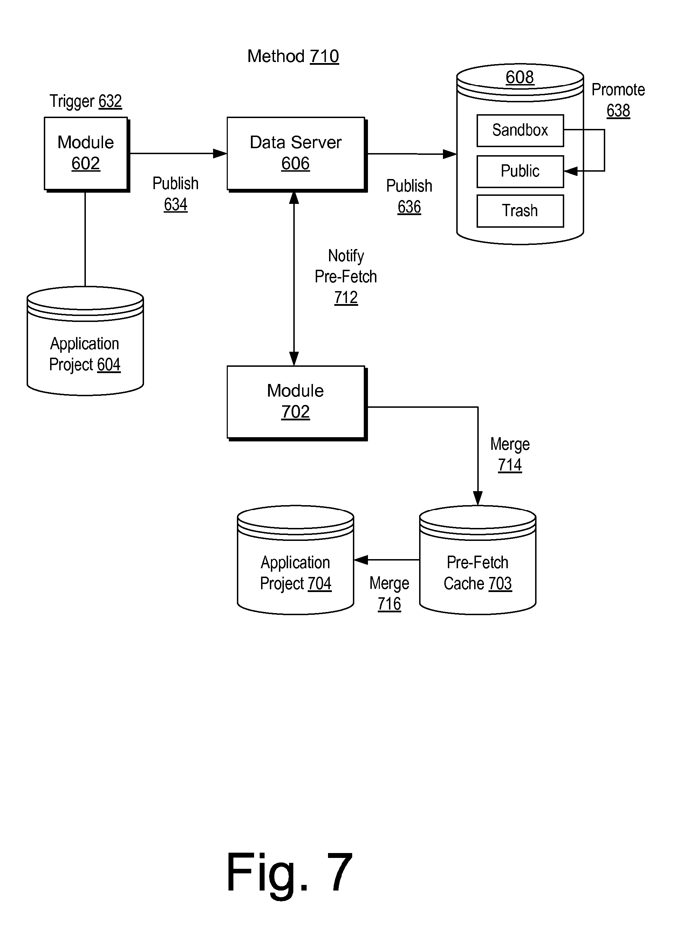

Fig. 7 shows an example of a method 710, which may be referred to as a pre-fetch method. A pre-fetch method may include pre-fetching data that has changed in a public repository to a staging area (e.g., a private workspace) "near" a user's individual project (e.g., based on one or more criteria, which may include one or more subscription criteria). Such a process may speed up fetching data when a user is notified of changes in the remote repository.

In Fig. 7, the method 710 is illustrated along with various components of Fig. 6 such as the module 602, the data storage that stores an application project 604, the data server 606 and the database 608. Also shown are a module 702, a pre-fetch cache 703 and another data storage that stores an application project 704. The method 710 can include issuing a pre-fetch notification or command 712, a merge command 714 and a merge command 716. For example, the method 710 may be a pre-fetch on notify method where one or more notification filter(s) may specify data of interest to a user, users, etc. As an example, a pre-fetch on notify method may include use of a local staging cache on a user's machine.

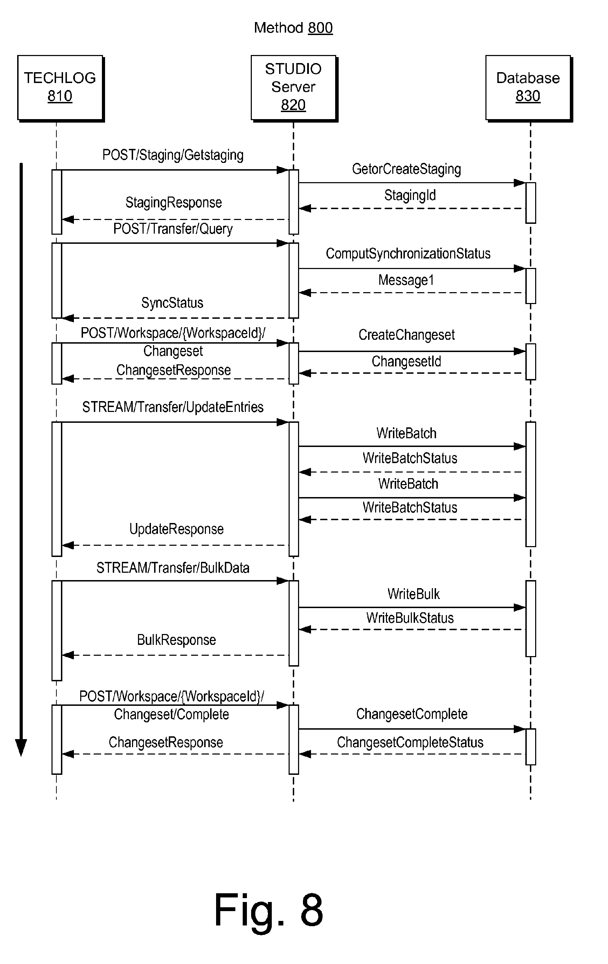

Figs. 8 to 13 show various examples of techniques that may be implemented, for example, as part of a send on save (SoS) method. As an example, various techniques may pertain to a SoS method and various techniques may pertain to a publish method, which may be, for example, part of an overarching method (e.g., a method that includes SoS and publication).

Fig. 8 shows some examples of transfers with respect to a TECHLOG™ application 810 and a STUDIO™ framework server 820 together with a database 830. Such transfers may be organized in one or more sequences (e.g., transfer sequences).

As an example, various transfers may occur when a user saves data to a local TECHLOG™ project, for example, a copy of project data may automatically be sent to a private area in a server asynchronously. In such an example, publishing to a public area may occur via a server-side promotion command. As an example, an administrator may back up data, for example, whether published or not published. As an example, a user may re-create a copy of a project (e.g., public data and/or private data) from a server (e.g., with sufficient access rights).

As an example, a system may provide for object identity and/or version tracking. As an example, a method may include transferring information in an asynchronous manner (e.g., asynchronously), for example, in a restartable silent manner with silent transfers (e.g., consider scenarios that may involve periodically unreliable network connections). As an example, timings of one or more transfers may be analyzed (see, e.g., the module 607 of Fig. 6, etc.).

As an example, an application framework such as the TECHLOG™ application framework may include a client module such as a STUDIO™ client module for communications with a STUDIO™ server. As an example, a client module may provide for local data access, remote connection, batching, etc. As an example, a server module (e.g., a STUDIO™ server module) may include features for authentication/authorization, identity service, data access, notifications, etc. As an example, a management module (e.g., a STUDIO™ management module) may include features for workspace management, data cleanup, etc.

As an example, a method can include pushing unpublished data to a server, optionally without user intervention. In such an example, a method may include server-side validating of data, server-side data tracking and/or monitoring of data, data backup and/or recovery, etc.

Example of a save workflow.
1. User saves data to local project
   1.1. Data access layer (DAL) notifies framework client (e.g., STUDIO™ framework client, etc.) module of change.
   1.2.framework client module builds a collection of pending batches identified with a GUID to send to private staging area in framework server (e.g., STUDIO™ framework server, etc.).
   1.3.framework client module asynchronously sends batches to framework server.
   1.4. framework server stores:
      ▪ Batch content in staging area with reference to a workspace that describes the local project (e.g., deleted items are saved with a deleted flag), optionally, for example, a TECHLOG™ application project.
      ▪ Information about each transmitted batch: batch Id and reference to items transmitted.
   1.5. framework server sends back status for each batch that was saved.
   1.6. framework client module removes confirmed batch from the pending batch list and goes back to 1.3 until desired number of batches are sent.
2. If user changes and saves local data before desired number of batches are sent
   2.1. DAL notifies framework client module of change.
   2.2.framework client module rebuilds a pending batches list
   2.3. Workflow resumes at 1.3
3. If network connection is lost before desired number of batches are received and acknowledged
   3.1. Transfer of batches stops
   3.2. When user saves local data, steps 1.1 and 1.2 are still executed.
   3.3. When user reconnects (possibly on auto-reconnect by application client):
      3.3.1. framework client queries framework server for status of currently pending batches by sending a list of batch identities
      3.3.2. framework server sends back the identities of successfully saved batches
      3.3.3. Workflow resumes at 1.6

Example of a publish workflow.
1. User brings up transfer tool
   1.1.framework client sends identity and update dates of items in pending batches to server to obtain synchronization status
   1.2. Server combines update information received from the client with the information on items that already saved to staging area to compute item's synchronization status and send return the synchronization status vector back to the client
   1.3. framework client displays local and remote items with their synchronization status to the user.
2. User selects items to send to the server and initiates the transfer
   2.1.framework client sends remaining pending batches to the server's staging area (e.g., save workflow)
   2.2. framework server chases dependencies for selected items to build a potential transfer set
   2.3.framework server performs validation on the transfer set (synchronization conflict, uniqueness, etc.)
3. If validation failed for some items:
   3.1.framework server sends back validation information to client
   3.2.framework client notifies user of validation error
   3.3. User takes corrective action (corrects data, deselect item from publication list, etc.).
   3.4. Workflow resumes from 2.
4. If validation succeeds
   4.1. framework server promotes items to public area
      4.1.1. framework server updates published items history
      4.1.2. framework server updates published items synchronization update
   4.2. framework server moves deleted items to deleted area
   4.3.framework server notifies client of publication success
   4.4.framework client notifies user of publication success

As an example, in a re-create project workflow, (a) a framework server may maintain a table of projects that have been connected to it with information such as user, machine, and directory, (b) for items in a project that were persisted to the server via send on save, they can include a maintained link to the project whether an item is in a private staging area or in the public area, (c) an item may be linked to several projects (e.g., each project that has a local copy).

Example where an application user wants to re-create a project whose content is saved on the server:
1. User creates a new empty project and saves it
   1.1.framework client sends new project information to framework server
   1.2. framework server creates empty staging area
2. User uses framework client to bring up a list of saved project
   2.1. User can filter the list to show his own projects or the projects of a specific user
3. User selects a project to retrieve
   3.1.framework client fetches related items from the server
   3.2. If the selected project belongs to the same user, items whether published or not are retrieved
   3.3. If the selected project does not belong to the same user, published items are retrieved
   3.4. Server associated retrieved items with the new project

As an example, a transfer service may include a collection of APIs for data transfer workflows between a server and a client. In such an example, the transfer APIs may be implemented using HTTP handlers to stream amounts of data between the client and the server. As an example, workspace management (e.g., for send on save) and bulk storage optimization may be part of transfer optimization.

As an example, a transfer workflow may be composed of a number of server API calls.

### Example of a workspace.

A workspace may be a temporary staging area (e.g., a private workspace) for data in a project. As an example, a client application may establish a workspace for a current session, for example, by querying and using an existing workspace or creating a new one.

### Example of an entity transfer.

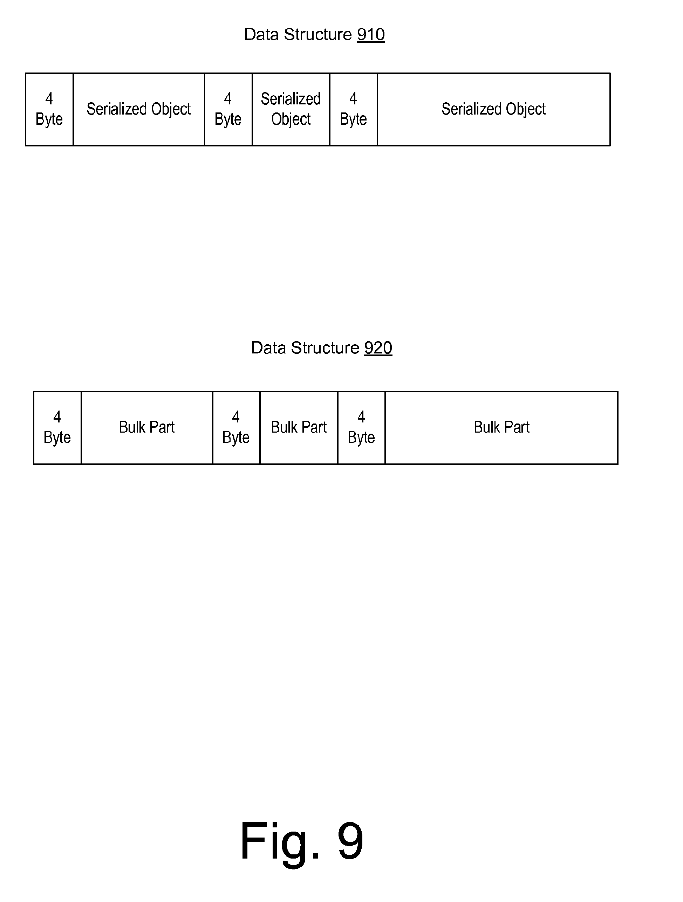

As an example, a client may identify entities (e.g., information, entity objects, data, etc.) in a local project that are to be saved in a workspace. In such an example, a system may then use a transfer API to transfer a set of entities to a server. As an example, entities may be streamed as one or more data structures to a server using protocol buffer binary serialization. For example, as illustrated in Fig. 9, a data structure 910 and a data structure 920 may include a low byte count block. For example, an entity (e.g., a serialized object) may be preceded by a 4 byte unsigned integer that specifies the size of the entity. As shown in the data structure 910 of Fig. 9, a plurality of serialized objects may be transferred where a low byte count block indicates a size of a corresponding serialized object (see, e.g., different sizes of three serialized objects).

### Example of an entity response.

As an example, an entity response may be a streamed list of status messages, for example, one for each entity transferred. In addition to success or failure status for the entity, the response may include bulk status which may, for example, identify one or more bulk parts that are not available in the server.

### Example of a bulk transfer.

As an example, after a set of entities is transferred and the response objects are received, a client may build a list of bulk data parts that are to be sent. The bulk parts may then be sent to the server using the same protocol described above. In Fig. 9, the data structure 920 is an example of a packet or block for a bulk transfer where a low byte count block may precede a packet or block to indicate, for example, a size of the packet or block (e.g., actual or approximate size).

As an example, a smallest unit being streamed in a single bulk part may be specified (e.g., by a number of bytes, etc.). As an example, for large bulk parts, memory usage may be optimized by streaming each bulk part (e.g., implemented as an option, for example, depending on one or more characteristics of information to be transmitted).

As an example, one or more types of data structures may be implemented for purposes of transferring one or more entities. As an example, a language-neutral, platform-neutral, extensible mechanism for serializing structured data may be implemented (e.g., Protocol Buffers, etc.). As an example, a lightweight data-interchange format may be implemented (e.g., JavaScript Object Notation "JSON", etc.). As an example, an API-based protocol that provides for passing messages between client and server (e.g., to initiate and close sessions, identify data available on a server, initiate transfer of a subset of data, etc.) may be implemented (e.g., Energistics Transfer Protocol, etc.).

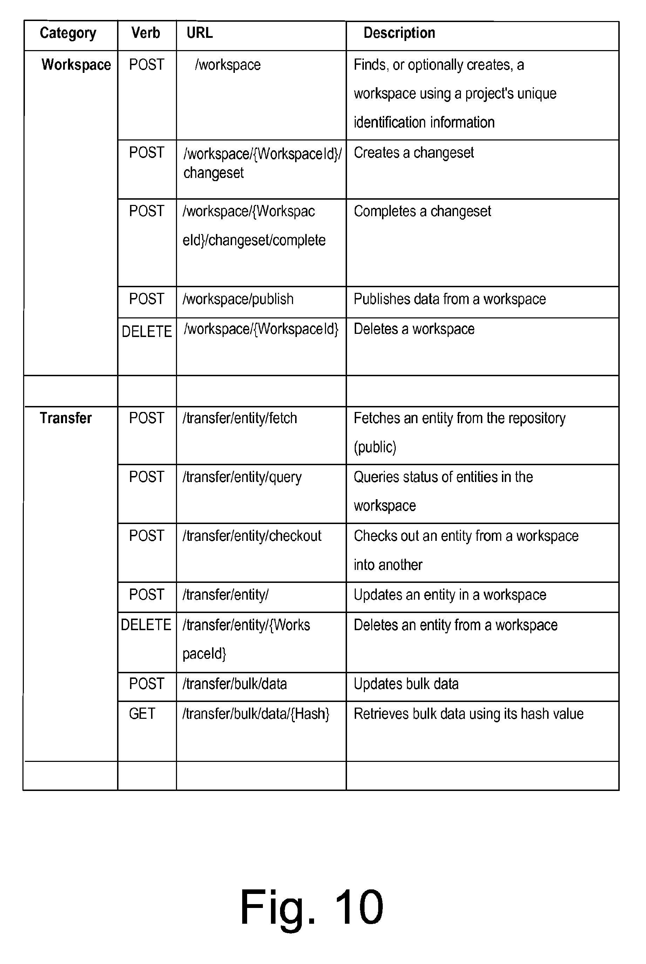

Fig. 10 shows an example of a table that includes examples of transfer APIs (e.g., including workspace APIs). In the examples of Fig. 10, URLs may be implemented. As an example, another approach may be taken to make calls, etc. that can implement various functions as to transfer of information, publication of information, deletion of information, etc.

As an example, a send on save feature of a framework may be used by a client to store local project data into a staging area (workspace) in a repository. In such an example, a server may include APIs for workspace management (create, delete etc.) and fetch and send to workspace. Such an approach may provide for: optimization of transfer and publish workflows, optimization of synchronization queries, project recovery, etc.

As an example, project data may be stored in one or more workspaces. As an example, a workspace may be a logical storage area that includes data that is private to a project. Workspaces may be part of a repository but the data in the workspace may be separate from the repository data. An application client may map to a single workspace for example when the application connects to a repository.

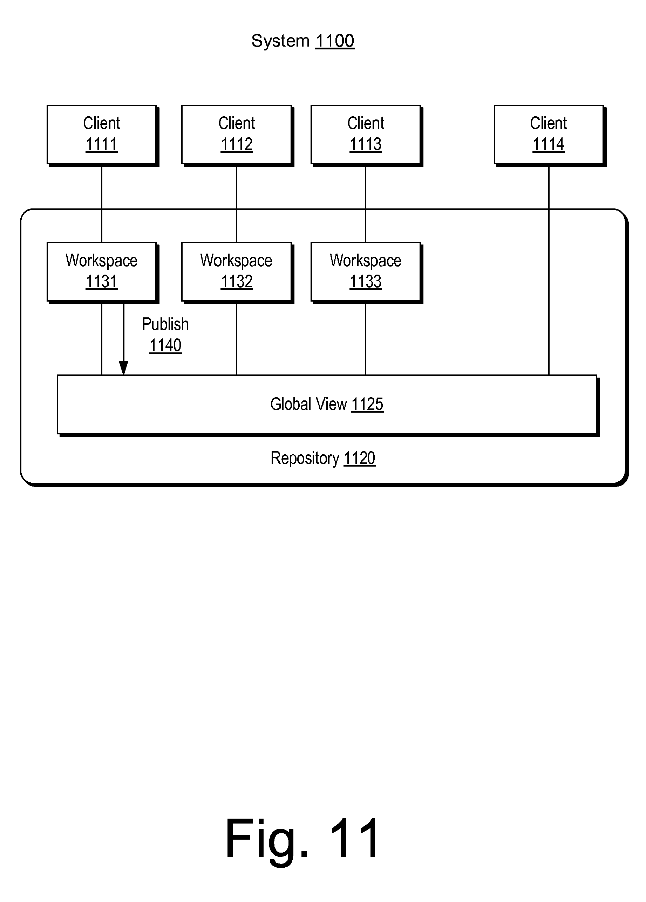

Fig. 11 shows an example of a system 1100 that includes multiple clients 1111, 1112, 1113 and 1114, a repository 1120, a global view space 1125 and workspaces 1131, 1132 and 1133 (e.g., private workspaces) where a publish command 1140 may act to publish information in the workspace 1131 to the global view space 1125 (e.g., a public workspace). Fig. 11 illustrates the system 1100 with respect to a mapping hierarchy (e.g., a logical view of workspaces).

Physically, workspaces may be implemented using a versioning system in a schema. For example, rows in a data table may be versioned. A version table may map a particular workspace to a versioned data row in the data table. A single versioned data row may be pointed to by multiple workspaces. Changes made to data in the repository or in a particular workspace may result in a new version of the row to be created. Such an approach may ensure that a change is not automatically reflected in other workspaces and may also provide for optimal storage and performance (e.g., where rows are not duplicated unless desired).

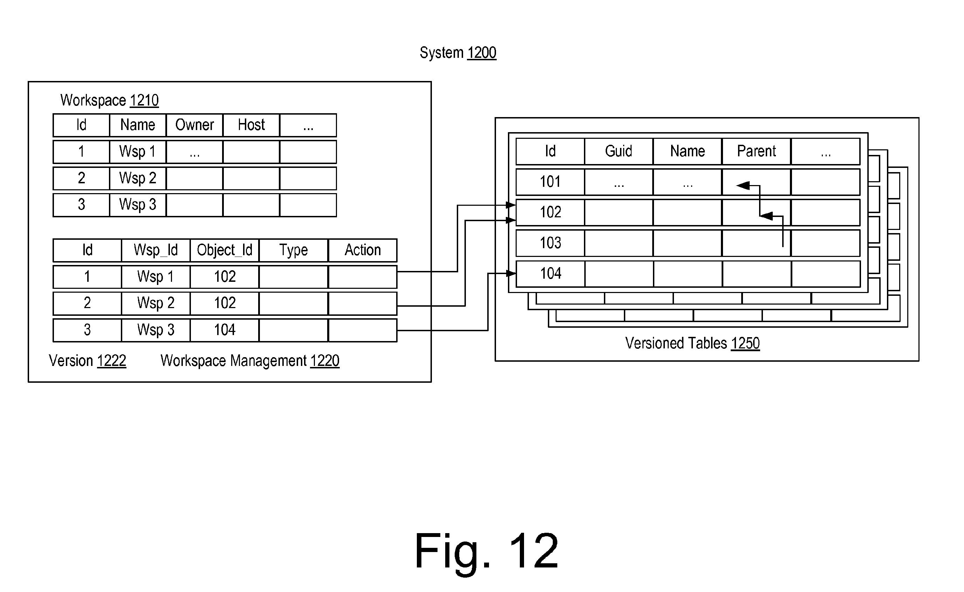

Fig. 12 shows an example of a system 1200 that includes a workspace physical view, for example, where various data entries, data structures, etc. are linked, which may facilitate management of such data. The system 1200 includes a workspace 1210 (e.g., with various private workspaces Wsp 1, Wsp 2, Wsp 3), a workspace management space 1220 (e.g., where objects may be identified via an object Id "Object_Id"), and versioning information 1222 associated with versioned tables 1250 (e.g., in a versioned tables space where object Ids may be associated with those in one or more workspaces Wsp 1, Wsp 2, Wsp 3, etc.).

As an example, a process of moving data from a workspace to a repository may occur through a "publish" workflow. In such an example, the publish workflow may first validate consistency of a workspace (e.g., by performing one or more integrity checks), followed by validation rule checks, followed by promotion of data from workspace to a repository view.

### Example of bulk data de-duplication.

As an example, bulk data may be transferred and stored separately from relational data. Transfer APIs (e.g., in previous section) may include different APIs for entity and bulk transfers. Such an approach may provide an ability to stream bulk data differently than relational data for optimization of bulk transfers. It may also provide an ability to optimize storage and performance of the bulk transfer by de-duplication of bulk data.

As an example, bulk data may be transferred and stored on the server side in blocks such that large bulks may include multiple blocks that collectively form the bulk. During the transfer of relational data, the metadata for bulks may be transferred. This metadata may not include actual bulk data but rather information about the bulk data including the number of bytes and a hash value representing the fingerprint of the data. The entity transfer response may include a "bulk response" object which describes the bulk parts that are missing on the server. The server may build this list from the bulk metadata in the relational data, comparing it to the bulks the server already has. The client may then send the missing bulk parts using the streaming mechanism described in the previous section.

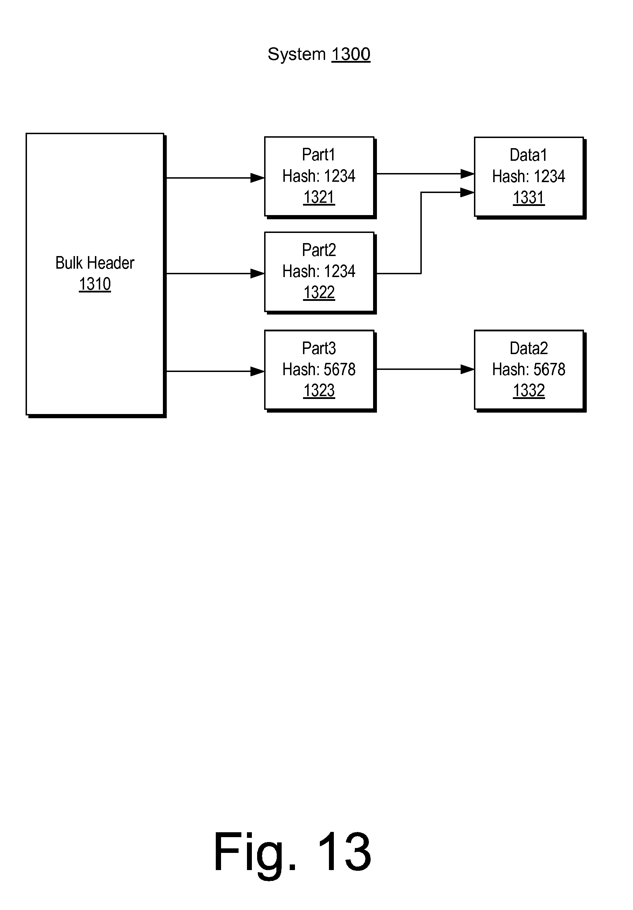

Fig. 13 shows an example of a system 1300 that can implement a bulk header and hash-based technique. For example, a bulk header 1310 may be transmitted as a data structure via a network where the bulk header 1310 may include information as to various parts 1321, 1322 and 1323. In such an example, the individual parts may be associated with a respective hash (e.g., a hash value). As an example, a hash value may be used to identify data such as, for example, data 1331 and data 1332.

As an example, a bulk header may be a logical bulk that is associated with an entity. The bulk header may be composed of a set of ordered bulk parts. The bulk parts may identify a section or block of bulk data using a hash value. The bulk part may point to the bulk data for that part which is stored separately. As an example, multiple bulk parts may point to the same bulk data if the parts are the same. Such an approach may allow for implementation of a de-duplication mechanism. Such a mechanism may, for example, provide for: storage of bulk data in the database that is optimized, therefore reducing the storage space requirements; transfer of bulk data that is faster if there is significant duplication of data in a project; resuming partial transfers that can be restarted to send the missing parts instead of the complete bulk; appending to an existing bulk may be optimized as an addition (or the part that has the change) has to be sent instead of the whole bulk; and/or reducing sizes of bulk parts that may avoid implementation of a file-stream (e.g., on a SQL Server, which may lighten deployment).

As an example, blocks may be identified by a cryptographic hash value representing a fingerprint of the data. As an example, consider the SHA2 algorithm, which can transform (hash) an arbitrary set of data elements, such as a text file, into a single fixed length value (the hash or hash value). A process may use a SHA2 algorithm, a variant of the SHA2 algorithm such as the SHA512 or one or more other hash algorithms. While a hashing function may result in two non-identical blocks of data generating the same hash value (e.g., a hash collision), for SHA2 the odds of such a collision are quite low.

As an example, one or more approaches may be implemented to mitigate risk of hash collisions. For example, consider, for bulks that are composed of multiple blocks, a process may calculate the hash of the entire bulk once the blocks are submitted and compare that the hash value received from the client. In such an example, a mismatch would indicate a hash collision problem. As an example, a process may compare length (e.g., number of bytes) of a block in addition to a hash value. As an example, a process may compare the first and last N bytes of the block in addition to a hash value. As an example, a process may hash each block multiple times and check that each hash matches. For instance, such a process may hash an entire block, as well as, for example, the first half and second half of the blocks independently to have three hash values to compare. In such an example, the odds of hashes colliding are presumably even lower than the odds of one colliding.

As an example, a method can include establishing a context using an application executing on a local computing device; packing information associated with the context using a background process executing on the local computing device; transmitting the packed information via a network interface; receiving the packed information at a remote computing device; and staging information received in the packed information to a private staging area of a remote storage device. As an example, such a method may include publishing the information in the private staging area for access via a network by a plurality of local computing devices.

As an example, a project may include thousands of variables that may, for example, establish a context. As an example, a project may be defined (e.g., specified) by information, which may, for example, be of the order of tens of megabytes or more. As an example, a project may be defined (e.g., constructed) over a period of days. As an example, a user may login and logout of a machine that executes an application for building a project. As an example, after a login, a background process may commence that determines if a prior amount of information intended to be transmitted via a network interface had actually been transmitted. In such an example, the process may commence with re-transmission to help ensure integrity of data in a remote staging area. As an example, a project may be constructed by performing one or more workflows.

As an example, information may be generated during a workflow that provides a context. As an example, information may be packed, transmitted and staged in association with one or more workflows associated with a project, for example, where a workflow may be re-constructed, audited, revised, etc. based at least in part on retrieval of staged information.

As an example, a background process may implement protocol buffers, for example, as part of a binary serialization format. Such a process may provide for size reduction in transfers (e.g., optionally smaller than xml) and be platform independent (e.g., OS independent). Such a process may be extensible (e.g., an ability to add new data to old transfers). As an example, a .NET™ framework may provide for serialization of .NET™ objects (e.g., optionally compatible .NET™ 2.0/3.0/3.5, .NET™ CF 2.0/3.5, Mono 2.x, SILVERLIGHT™ 2, etc.). As an example, a language-neutral, platform-neutral, extensible mechanism for serializing structured data may be implemented (e.g., GOOGLE™ Protocol Buffers, etc.). As an example, a lightweight data-interchange format may be implemented (e.g., JavaScript Object Notation "JSON", etc.). As an example, an API-based protocol that provides for passing messages between client and server (e.g., to initiate and close sessions, identify data available on a server, initiate transfer of a subset of data, etc.) may be implemented (e.g., Energistics Transfer Protocol, etc.). As an example, a process may provide for management of object versions (e.g., data versions, code versions, etc.).

As an example, the phrase "protocol buffers" may refer to a method of serializing structured data, for example, where the method involves an interface description language that describes the structure of some data and a program that generates from that description source code in one or more programming languages for generating or parsing a stream of bytes that represents the structured data.

As an example, a schema for a particular use of protocol buffers associated data types and field names, with integers to be used to identify each field may be implemented. As an example, protocol buffer data may include numbers without field names, which may provide some bandwidth or storage saving compared with alternative systems that do include the field names in the data. As an example, consider:

```
      message Point {
       required int32 x = 1;
       required int32 y = 2;
       optional string label = 3;
      }
      message Line {
       required Point start = 1;
       required Point end = 2;
       optional string label = 3;
      }
      message Polyline {
       repeated Point point = 1;
       optional string label = 2;
      }
```

In such an example, the "Point" message defines two data items, x and y. The data item label may be optional. In the example, each data item includes a tag, which may be defined after the equal sign, e.g. x has the tag 1.

In the example, the "Line" and "Polyline" messages demonstrate how composition works in protocol buffers (e.g., they both use Point). Polyline has a repeated field, which behaves like a vector.

Such a schema may subsequently be compiled for use by one or more programming languages. As an example, a compiler called protoc (Google, Mountain View, California) can produce output for language-based handling via languages such as C++, Java, Python, etc. Other schema compilers are available from other sources to create language-dependent output. As an example, after having produced the C++ version of the above protocol buffer schema, the message objects can be accessed using the following example in C++:

```
            #include "polyline.pb.h" // generated by calling protoc polyline.proto
      (defined above)
```

```
Line* createNewLine(const std::string& name) {
        Line* line = new Line;
       line->mutable_start()->set_x(10);
       line->mutable_start()->set_y(20);
       line->mutable_end()->set_x(30);
       line->mutable_end()->set_y(40);
       line->set_label(name);
       return line;
      }
```

```
Polyline* createNewPolyline() {
        Polyline* polyline = new Polyline;
        Point* point1 = polyline->add_point();
       point1->set_x(10);
       point1->set_y(10);
        Point* point2 = polyline->add_point();
       point2->set_x(10);
       point2->set_y(10);
       return polyline;
      }
```

As an example, a method may implement a schema for transferring information via a network interface. As an example, such a method may operate as a background process on a local machine that includes an operating system for establishing an operating system environment for execution of an application where, for example, the application may be an object-oriented application. As an example, a context may depend at least in part on characteristics associated with objects in an object-oriented application. As an example, a user may desire to publish the context such that another user (or the user) may reconstruct the context, for example, without having to wait for transfer of information from the user's local machine to a remote location. In other words, where the user desires publication, publication (e.g., access to information to establish a context) may be relatively instantaneous (e.g., available to other users at their respective local machines via a network interface operatively coupled to a public data space that includes the information).

As an example, a user may be identified by one or more pieces of information. For example, consider path, plus workstation plus user that has been using the workstation (e.g., application executing thereon). A workspace may be an individual workspace that can transfer information to a global workspace, for example, that provides information accessible to a plurality of user machines.

As mentioned, as an example, a process of moving data from a workspace to a repository (e.g., for global viewing) may occur through a "publish" workflow (e.g., instruction or instructions). As an example, a publish workflow may first validate consistency of a workspace (e.g., one or more integrity checks), followed by one or more validation rule checks, followed by promotion of data from workspace to the repository view (e.g., global workspace, etc.).

As an example, via versioning and/or control branching, one copy of information may be referenced (e.g., reference counting, etc.) as belonging to more than one workspace (e.g., more than one private workspace).

As an example, a background process may implement a delta trickle technique, for example, where "change" information is determined as a delta between old and new information and where the delta may be broken into pieces and trickled over a network interface (e.g., depending on the size of the delta). For example, a parameter may specify a delta size where if a delta exceeds the delta size, the delta is broken up and trickled (e.g., in individual packets). Such a process may provide for resuming transfers without having a large backlog of transfers to resume. For example, as packet size may be small, the risk of non-transfer responsive to a network interrupt, a shut-down, a power loss, etc. may be diminished. And, where availability returns, trickling may continue, for example, optionally first determining if a prior packet is to be resent (e.g., as part of a safety margin or as being determined that it was not previously sent). Such a process may be suitable for users having to operate in environments where power supply may be unreliable and/or where network availability is intermittent. Such environments can pose issues when a user wants to publish a context (e.g., a project). Accordingly, as an example, a method may benefit a user in an environment in two manners, providing a remote back-up copy (e.g., of trickled context information) and providing a relatively quick manner to publish. As an example, a user may be located in or near an oil and/or gas field, which may be some distance from an urban environment and possibly at sea (e.g., on an offshore platform).

Referring again to the geologic environment 150 of Fig. 1, communication (e.g., network communication) may rely on a satellite, which may have an orbit and availability during particular windows of time.

As an example, a satellite may be geostationary. As an example, a satellite may not be geostationary. As an example, a user may move with a local machine such that the user comes into range of a satellite, goes out of range of a satellite, etc. As an example, a user may be on a ship, on a platform, in a plane, in a land vehicle, etc. As an example, where network interruptions occur or are expected to occur, a background process may be implemented on a computing device that acts to (a) store project data remotely and (b) expedite publication of information for a project from a remote data store.

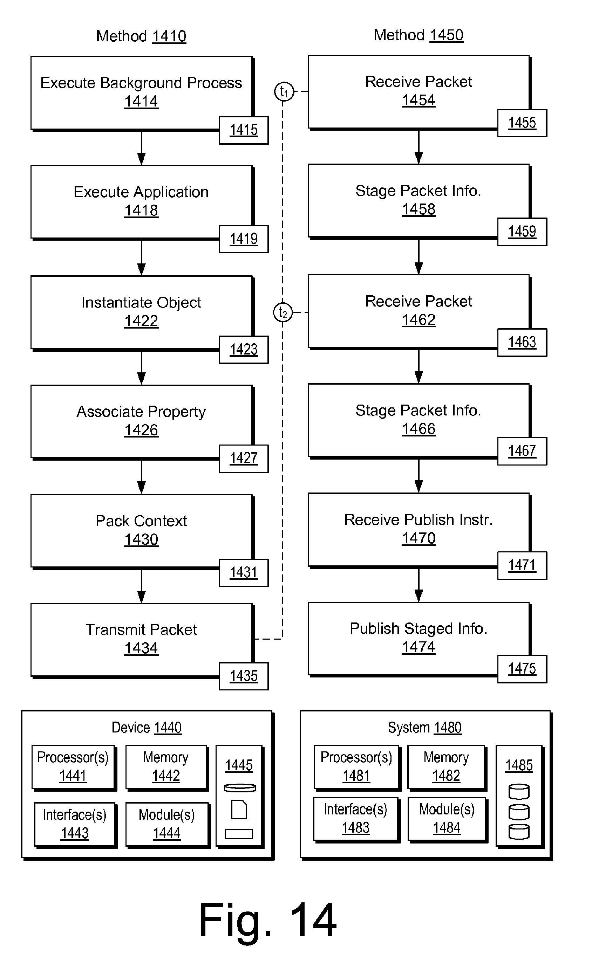

Fig. 14 shows an example of a method 1410 that includes an execute block 1414 for executing a background process; an execute block 1418 for executing an application; an instantiate block 1422 for instantiating an object using the application; an associate block 1426 for associating a property with the object to establish a context using the application; a pack block 1430 for packing information that represents the context into a packet using the background process; and a transmit block 1434 for transmitting the packet via a network interface. As an example, the application may be a wellbore software platform application. As an example, an object may represent a physical entity. As an example, a background process may split information that represents a context into multiple packets.

Fig. 14 also shows an example of a method 1450 that includes a reception block 1454 for receiving packed information via a network interface; a stage block 1458 for staging the packed information to a private storage area; a reception block 1462 for receiving additional packed information via the network interface; a stage block 1466 for staging the additional packed information to the private storage area; a reception block 1470 for receiving a publication instruction via the network interface; and a publish block 1474 for publishing the information staged to the private storage area. As an example, publishing may include transferring information to a public storage area.

As an example, the method 1410 and the method 1450 may be coupled, for example, where one or more computing machines perform the method 1410 and one or more computing machines perform the method 1450. As an example, a local machine may perform the method 1410 while a remote machine performs the method 1450. As an example, a packet transmitted by the transmit block 1434 of the method 1410 may be a packet received by the reception block 1454 of the method 1450.

As an example, a system may include one or more processors and memory that may store one or more blocks that include processor executable instructions, for example, to perform one or more actions of a method such as the method 1410. As an example, a system may include one or more processors and memory that may store one or more blocks that include processor executable instructions, for example, to perform one or more actions of a method such as the method 1450.

The method 1410 is shown in Fig. 14 in association with various computer-readable media (CRM) blocks 1415, 1419, 1423, 1427, 1431 and 1435 (e.g., non-transitory media that are not carrier waves). Such blocks generally include instructions suitable for execution by one or more processors (or cores) to instruct a computing device or system to perform one or more actions. While various blocks are shown, a single medium may be configured with instructions to allow for, at least in part, performance of various actions of the method 1410. As an example, a computer-readable medium (CRM) may be a non-transitory computer-readable storage medium that is not a carrier wave. One or more CRM blocks may be provided for GUIs, etc.

The method 1450 is shown in Fig. 14 in association with various computer-readable media (CRM) blocks 1455, 1459, 1463, 1467, 1471 and 1475 (e.g., non-transitory media that are not carrier waves). Such blocks generally include instructions suitable for execution by one or more processors (or cores) to instruct a computing device or system to perform one or more actions. While various blocks are shown, a single medium may be configured with instructions to allow for, at least in part, performance of various actions of the method 1450. As an example, a computer-readable medium (CRM) may be a non-transitory computer-readable storage medium that is not a carrier wave. One or more CRM blocks may be provided for GUIs, etc.

Fig. 14 also shows an example of a device 1440 and an example of a system 1480. As shown, the device 1440 can include one or more processors 1441, memory 1442, one or more interfaces 1443, one or more modules 1444 (see, e.g., the blocks 1415, 1419, 1423, 1427, 1431 and 1435, etc.) and one or more storage components 1445 (e.g., one or more storage drives, caches, etc.). As shown, the system 1480 can include one or more processors 1481, memory 1482, one or more interfaces 1483, one or more modules 1484 (see, e.g., the blocks 1455, 1459, 1463, 1467, 1471 and 1475, etc.), and one or more storage devices 1485 (e.g., one or more storage drives, etc.). As an example, the device 1440 may implement the method 1410 and/or the system 1480 may implement the method 1450. As an example, a plurality of devices such as the device 1440 may transmit packets to a system such as the system 1480. As an example, the system 1480 and/or another device or system may include an analysis module such as, for example, the analysis module 607 of Fig. 6. In such a manner, information may be analyzed such as, for example, transmission timings, sizes, etc. As an example, a system such as the system 1480 may transmit information to one or more devices, which may include notification information, tuning information, workflow information, etc.

As an example, a system can include a processor; memory accessible by the processor; a network interface; one or more modules stored in the memory where the one or more modules include processor-executable instructions to instruct the system where the instructions include instructions to receive packed information via the network interface; stage the packed information to a private storage area of a storage device; receive additional packed information via the network interface; stage the additional packed information to the private storage area of the storage device; receive a publication instruction via the network interface; and publish the information staged to the private storage area of the storage device. In such an example, instructions may be included to instruct the system to publish the information to a public storage area.

As an example, a system may include instructions to instruct the system to analyze times associated with receipt of packed information. For example, a system may include instructions to instruct the system to determine work activity at a remote computing device based at least in part on an analysis of times associated with receipt of packed information. As another example, a system may include instructions to instruct the system to determine network information associated with a remote computing device based at least in part on an analysis of times associated with receipt of packed information.

As an example, a system can include instructions to instruct the system to access subscription information and to publish information staged to a private storage area of a storage device based at least in part on the subscription information. As an example, packed information may be associated with a member of a group and instructions to publish information staged to a private storage area can include instructions to grant access to the information for other members of the group (e.g., based on addresses, identifiers, etc.). In such an example, the group may be a project group associated with a geologic environment that includes at least one reservoir.

As an example, a system can include instructions to instruct the system to transmit one or more publication notifications to one or more subscribers. In such an example, the one or more subscribers may be associated with a reservoir development project (e.g., where published information is associated with the reservoir development project).

As an example, a method can include receiving packed information via a network interface; staging the packed information to a private storage area; receiving additional packed information via the network interface; staging the additional packed information to the private storage area; receiving a publication instruction via the network interface; and publishing the information staged to the private storage area. In such a method, publishing can include transferring the information to a public storage area.

As an example, a method may include analyzing times associated with receiving packed information and additional packed information. In such an example, the method may include determining work activity at a remote computing device based at least in part on the analyzing, determining network information associated with a remote computing device based at least in part on the analyzing and/or other types of activity, information, etc. As an example, a method may include transmitting information to a remote computing device based at least in part on analyzing. In such an example, the information may include a work activity report, a network connectivity report, information for connection to one or more alternative networks, a recommended publication time, etc.

As an example, a device can include a processor; memory accessible by the processor; a network interface; one or more modules stored in the memory where the one or more modules include processor-executable instructions to instruct the device where the instructions include instructions to execute a background process; execute an application; instantiate an object using the application; associate a property with the object to establish a context using the application; pack information that represents the context into a packet using the background process; and transmit the packet via the network interface. In such an example, the application may be a wellbore information application (e.g., for one or more of receiving, monitoring, analyzing, etc. wellbore information). As an example, an object represents a physical entity. As an example, a device may include instructions to split information that represents a context into multiple packets. As an example, such a process may be tunable, for example, according to one or more parameters. In such an example, tuning may facilitate transfer, accuracy of transfer, staging, publishing, analysis of information, etc. As an example, an analysis module such as the module 607 of Fig. 6 may analyze information based at least in part on one or more parameters, which may include tuning parameter, a network transmission parameter, a project-related parameter, etc.

As an example, a method can include establishing a context using an application executing on a local computing device; packing information associated with the context using a background process executing on the local computing device; transmitting the packed information via a network interface; receiving the packed information at a remote computing device; and staging information received in the packed information to a private staging area of a remote storage device. In such an example, the method may include publishing the information in the private staging area for access via a network by a plurality of computing devices.

As an example, a context may reference a model of a geologic environment. In such an example, the geologic environment may include a reservoir or reservoirs. As an example, a context may pertain to one or more operations to be taken with respect to a geologic environment (e.g., sensing, drilling, injecting, fracturing, producing, etc.).

As an example, a method can include determining whether a network connection exists for a network interface and if a connection exists, transmitting packed information, and if a connection does not exist, queuing packed information in a transmission queue, for example, in a storage drive of a computing device, etc. (e.g., a drive, a cache, etc.).

As an example, a method can include analyzing information in a private staging area. As an example, a method may include transmitting a message to one or more computing devices based at least in part on analyzing information in a private staging area and/or at least in part on analyzing information such as timing information associated with transmission of information (e.g., and/or storage of information). As an example, information may include one or more timestamps, which may be imparted by one or more pieces of equipment. As an example, information may include a creation time, a transmission time or transmission times, a reception time or reception times, a storage time or storage times, etc.
As an example, a message may be transmitted that includes one or more project identifiers. As an example, a method can include monitoring activity of a computing device based at least in part on analyzing information to be sent to or sent to a private staging area.

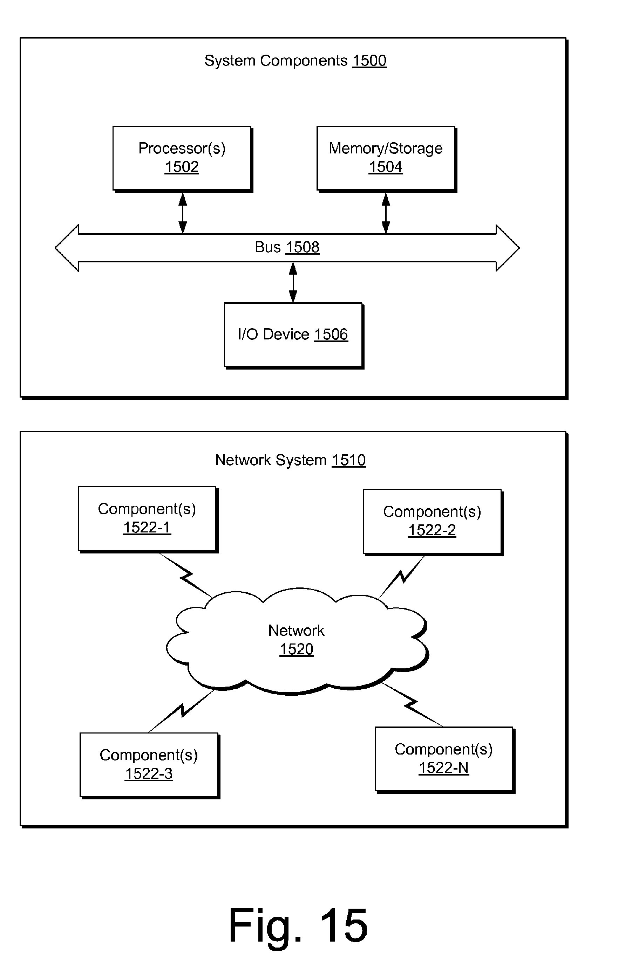

Fig. 15 shows components of an example of a computing system 1500 and an example of a networked system 1510. The system 1500 includes one or more processors 1502, memory and/or storage components 1504, one or more input and/or output devices 1506 and a bus 1508. In an example embodiment, instructions may be stored in one or more computer-readable media (e.g., memory/storage components 1504). Such instructions may be read by one or more processors (e.g., the processor(s) 1502) via a communication bus (e.g., the bus 1508), which may be wired or wireless. The one or more processors may execute such instructions to implement (wholly or in part) one or more attributes (e.g., as part of a method). A user may view output from and interact with a process via an I/O device (e.g., the device 1506). In an example embodiment, a computer-readable medium may be a storage component such as a physical memory storage device, for example, a chip, a chip on a package, a memory card, etc. (e.g., a computer-readable storage medium).

In an example embodiment, components may be distributed, such as in the network system 1510. The network system 1510 includes components 1522-1, 1522-2, 1522-3, ... 1522-N. For example, the components 1522-1 may include the processor(s) 1502 while the component(s) 1522-3 may include memory accessible by the processor(s) 1502. Further, the component(s) 1502-2 may include an I/O device for display and optionally interaction with a method. The network may be or include the Internet, an intranet, a cellular network, a satellite network, etc.

As an example, a device may be a mobile device that includes one or more network interfaces for communication of information. For example, a mobile device may include a wireless network interface (e.g., operable via IEEE 802.11, ETSI GSM, BLUETOOTH™, satellite, etc.). As an example, a mobile device may include components such as a main processor, memory, a display, display graphics circuitry (e.g., optionally including touch and gesture circuitry), a SIM slot, audio/video circuitry, motion processing circuitry (e.g., accelerometer, gyroscope), wireless LAN circuitry, smart card circuitry, transmitter circuitry, GPS circuitry, and a battery. As an example, a mobile device may be configured as a cell phone, a tablet, etc. As an example, a method may be implemented (e.g., wholly or in part) using a mobile device. As an example, a system may include one or more mobile devices.

As an example, a system may be a distributed environment, for example, a so-called "cloud" environment where various devices, components, etc. interact for purposes of data storage, communications, computing, etc. As an example, a device or a system may include one or more components for communication of information via one or more of the Internet (e.g., where communication occurs via one or more Internet protocols), a cellular network, a satellite network, etc. As an example, a method may be implemented in a distributed environment (e.g., wholly or in part as a cloud-based service).

As an example, information may be input from a display (e.g., consider a touchscreen), output to a display or both. As an example, information may be output to a projector, a laser device, a printer, etc. such that the information may be viewed. As an example, information may be output stereographically or holographically. As to a printer, consider a 2D or a 3D printer. As an example, a 3D printer may include one or more substances that can be output to construct a 3D object. For example, data may be provided to a 3D printer to construct a 3D representation of a subterranean formation. As an example, layers may be constructed in 3D (e.g., horizons, etc.), geobodies constructed in 3D, etc. As an example, holes, fractures, etc., may be constructed in 3D (e.g., as positive structures, as negative structures, etc.).

Although only a few example embodiments have been described in detail above, those skilled in the art will readily appreciate that many modifications are possible in the example embodiments. Accordingly, all such modifications are intended to be included within the scope of this disclosure as defined in the following claims. In the claims, means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures. It is the express intention of the applicant not to invoke 35 U.S.C. § 112, paragraph 6 for any limitations of any of the claims herein, except for those in which the claim expressly uses the words "means for" together with an associated function.

## Claims

1. A system (1480) comprising:
a processor (1481);
memory (1482) accessibly by the processor;
a network interface (1483);
one or more modules (1484) stored in the memory wherein the one or more modules comprise processor-executable instructions to instruct the system wherein the instructions comprise instructions to
receive packed information via the network interface;
stage the packed information to a private storage area of a storage device;
receive additional packed information via the network interface;
stage the additional packed information to the private storage area of the storage device;
receive a publication instruction via the network interface; and
publish the information staged to the private storage area of the storage device.

2. The system of claim 1 further comprising instructions to instruct the system to publish the information to a public storage area.

3. The system of claim 1 further comprising instructions to instruct the system to analyze times associated with receipt of packed information.

4. The system of claim 3 further comprising instructions to instruct the system to determine work activity at a remote computing device based at least in part on an analysis of times associated with receipt of packed information.

5. The system of claim 3 further comprising instructions to instruct the system to determine network information associated with a remote computing device based at least in part on an analysis of times associated with receipt of packed information.

6. The system of claim 1 further comprising instructions to instruct the system to access subscription information and to publish the information staged to the private storage area of the storage device based at least in part on the subscription information.

7. The system of claim 1 wherein the packed information is associated with a member of a group and wherein the instructions to publish the information staged to the private storage area comprise instructions to grant access to the information for other members of the group.

8. The system of claim 7 wherein the group comprises a project group associated with a geologic environment that comprises at least one reservoir.

9. The system of claim 1 further comprising instructions to instruct the system to transmit one or more publication notifications to one or more subscribers.

10. The system of claim 9 wherein the one or more subscribers are associated with a reservoir development project and wherein the information is associated with the reservoir development project.

11. A method (1450) comprising:
receiving packed information via a network interface (1454);
staging the packed information to a private storage area (1458);
receiving additional packed information via the network interface (1462);
staging the additional packed information to the private storage area (1466);
receiving a publication instruction via the network interface (1470); and
publishing the information staged to the private storage area (1474).

12. The method of claim 11 wherein the publishing comprises transferring the information to a public storage area.

13. The method of claim 11 further comprising analyzing times associated with the receiving of the packed information and the additional packed information.

14. The method of claim 13 further comprising determining work activity at a remote computing device based at least in part on the analyzing.

15. The method of claim 13 further comprising determining network information associated with a remote computing device based at least in part on the analyzing.

16. The method of claim 13 further comprising transmitting information to the remote computing device based at least in part on the analyzing wherein the information comprises at least one member selected from a group consisting of a work activity report, a network connectivity report, information for connection to one or more alternative networks, and a recommended publication time.

17. A device (1440) comprising:
a processor (1441);
memory (1442) accessibly by the processor;
a network interface (1443);
one or more modules (1444) stored in the memory wherein the one or more modules comprise processor-executable instructions to instruct the device wherein the instructions comprise instructions to
execute a background process;
execute an application;
instantiate an object using the application;
associate a property with the object to establish a context using the application;
pack information that represents the context into a packet using the background process; and
transmit the packet via the network interface.

18. The device of claim 17 wherein the application comprises a wellbore information application.

19. The device of claim 17 wherein the object represents a physical entity.

20. The device of claim 17 wherein the instructions further comprise instructions to split the information that represents the context into multiple packets.
